# EUROPÄISCHE PATENTSCHRIFT

(11) **EP 3 093 901 B1**
(45) Veröffentlichungstag und Bekanntmachung des Hinweises auf die Patenterteilung: **06.11.2019**
(21) Anmeldenummer: 16000856.1
(22) Anmeldetag: 15.04.2016
(51) Int. Cl.: H01M 2/10, H01M 2/20, H01M 10/6554, H01M 10/613, H01M 10/625, H01M 10/647, H01M 10/42

(54) **BATTERIEMODUL FÜR EINE MEHRZAHL DERARTIGER BATTERIEMODULE AUFWEISENDE BATTERIEANORDNUNGEN**
BATTERY MODULE FOR BATTERY DEVICES COMPRISING A NUMBER OF SUCH BATTERY MODULES
MODULE DE BATTERIE POUR DES SYSTEMES DE BATTERIE COMPRENANT UNE PLURALITE DES TELS MODULES DE BATTERIE

(30) Priorität: 13.05.2015 DE 102015006168
(43) Veröffentlichungstag der Anmeldung: 16.11.2016
(60) Teilanmeldung: 17000464.2
(73) Patentinhaber: Voltabox AG, 33129 Delbrück (DE)
(72) Erfinder: FRERS, Klaus Dieter, 33129 Delbrück (DE); PAMPEL, Jürgen, 32602 Vlotho (DE)
(74) Vertreter: Lelgemann, Karl-Heinz

(56) Entgegenhaltungen:
- CN-U- 204 315 644
- DE-A1-102011 075 044
- DE-A1-102013 204 180
- DE-A1-102013 213 540
- JP-A- 2013 025 983
- JP-A- 2014 035 970
- US-A1- 2012 021 260
- US-A1- 2014 342 195

## Beschreibung

Die Erfindung bezieht sich auf ein Batteriemodul mit einer Batterieeinheit sowie eine Batterieanordnung mit einer Mehrzahl solcher Batteriemodule.

Derartige Batteriemodule werden zu teilweise auch großvolumigen Batterieanordnungen zusammengefügt, um beispielsweise auch Fahrzeuge, wie Busse etc., mit elektrischer Antriebsenergie versorgen zu können. Aufgrund der großen Kapazitäten, die bei derartigen Fahrzeugen angefragt werden, muss eine große Anzahl von miteinander in Verbindung stehenden Batteriezellen und eine ebenfalls vergleichsweise große Anzahl von Batteriemodulen, in denen diese Batteriezellen zusammengefaßt sind, zu einer Batterieanordnung zusammengefaßt werden, die dauerhaft und zuverlässig gewährleistet, dass die für den Betrieb des Fahrzeugs erforderliche Antriebsenergie zur Verfügung gestellt wird.

Aus der DE 10 2013 204 180 A1 ist ein Deckel eines Gehäuses eines Batteriemoduls bekannt, wobei innerhalb dieses Gehäuses sowohl die Batterieeinheit des Batteriemoduls als auch ein Rahmensystem desselben aufgenommen ist. Zu diesem Rahmensystem gehören Schienen, die zumindest teilweise oberhalb der Batterieeinheit des Batteriemoduls angeordnet sind und auf denen der Deckel ruht. Diese Schienen sind mittels Schraubverbindungen mit den stirnseitigen Gehäusewandungen und des Gehäuses fest verbunden. Entsprechend ist der Deckel mittels des Gehäuses bzw. mittels dessen Stirnwandungen gehaltert und lagert nicht auf der innerhalb des Gehäuses aufgenommenen Batterieeinheit. Der Deckel befindet sich in Anlage an den Wandungen des Gehäuses. Die Seitenwände bzw. Längswände des Gehäuseteils sind mit einer planen Oberfläche realisiert.

Aus der JP 2013 025983 A ist ein Batteriemodul bekannt, zu dem eine Batterieeinheit gehört, die eine Vielzahl miteinander verbundener Batteriezellen aufweist. Jeweils zwei Batteriezellen der Batterieeinheit sind mittels Zellverbindern miteinander verbindbar. Die Batterieeinheit liegt mit einer Stirnwand an einer in Bezug auf ein Gehäuse des Batteriemoduls ortsfest angeordneten Gehäusestirnwand an. An der der ortsfesten Gehäusestirnwand entfernten Stirnwand der Batterieeinheit ist ein Spannglied angeordnet, das in Längsrichtung der Batterieeinheit auf die ortsfeste Gehäusestirnwand zu verstellbar ist. Zu dem Batteriemodul gehört ein Gehäusedeckel. Des Weiteren ist das Batteriemodul mit einer Steuerbaugruppe versehen, die eine Steuerplatine und einen Tragrahmen in Form einer Oberflächenplatte aufweist. Die Batterieeinheit ist bei dem bekannten Batteriemodul innerhalb eines Gehäuses bzw. einer Gehäusebaugruppe aufgenommen, zu der eine Bodenplatte und Seitenwandungen gehören. Die Steuerplatine ist zwischen der Oberflächenplatte und einer Deckelplatte angeordnet.

Ausgehend von dem vorstehend geschilderten Stand der Technik liegt der Erfindung die Aufgabe zugrunde, ein Batteriemodul für eine Mehrzahl derartiger Batteriemodule aufweisende Batterieanordnungen zur Verfügung zu stellen, welches dauerhaft betriebssicher und weitgehend störungsfrei funktionsfähig ist.

Diese Aufgabe wird erfindungsgemäß durch ein Batteriemodul mit den Merkmalen des Patentanspruchs 1 gelöst. Bevorzugte Ausführungsformen werden in den abhängigen Ansprüchen dargestellt.

Die Batterieeinheit lässt sich in einfacher Weise innerhalb des Gehäuses bzw. der Gehäusebaugruppe aufnehmen, wobei einerseits eine gewisse Flexibilität des Batteriemoduls erreichbar ist und andererseits dennoch eine feste räumliche Fixierung der Batterieeinheit innerhalb des Gehäuses des Batteriemoduls gesichert wird.

Eine mehrere derartiger Batteriemodule aufweisende Batterieanordnung kann kompakt und mechanisch stabil ausgestaltet werden.

In technisch-konstruktiv vergleichsweise wenig aufwändiger Weise lässt sich die räumliche Fixierung der Batterieeinheiten bewerkstelligen, wenn zwischen der ortsfesten Gehäusestirnwand des Batteriemoduls und dessen Spannglied Stäbe angeordnet sind, die spanngliedseitig Gewindeabschnitte mit Spannmuttern aufweisen, mittels denen das Spannglied in Richtung zur ortsfesten Gehäusestirnwand verstellbar ist. Durch Drehen der Spannmuttern, die zwecks Ausgleich von Fertigungstoleranzen od.dgl. auch in unterschiedlicher Weise gedreht werden können, kann die räumliche Fixierung zwischen den Batteriezellen der Batterieeinheit des Batteriemoduls wirksam hergestellt werden.

Die Seitenwandungen sind vorzugsweise mittels Schraubverbindungen mit der Bodenplatte verbindbar.

Zur Verbesserung der Wärmeabfuhr aus der Batterieeinheit kann es zweckmäßig sein, auf der Außenfläche der Seitenwandungen der Gehäusebaugruppe des Batteriemoduls eine Vielzahl Kühlrippen auszugestalten.

Alternativ oder kumulativ können die genannten Seitenwandungen der Gehäusebaugruppe auch wassergekühlt oder luftgekühlt ausgestaltet werden.

Eine weitere Erhöhung der Kompaktheit und der mechanischen Stabilität ist erreichbar, wenn die räumliche Struktur der Seitenwandungen zu der der Seitenwandungen benachbarter Batteriemodule komplementär gestaltet ist.

Um mehrere derartige Batteriemodule in einfacher Weise und mit einem geringen Aufwand aneinander anschließbar zu gestalten, ist es vorteilhaft, wenn zu dem Batteriemodul eine Anschlussplatte gehört, mittels der eine Gehäusebaugruppe des Batteriemoduls an einer Stirnseite der- bzw. desselben verschließbar ist und die für jede der beiden Stromschienen des Batteriemoduls einen Anschlussterminal aufweist, wobei jedes Anschlussterminal als Doppelmutterverbindung ausgebildet und an seiner Außenseite anschließbar ist.

Zweckmäßigerweise ist die Anschlussplatte an ihren Anschlussterminals mit Anschlussenden der Stromschienen des jeweiligen Batteriemoduls verschraubbar.

Mit einem vergleichsweise geringen technisch-konstruktiven Aufwand und mit hoher Zuverlässigkeit lassen sich die Batteriezellen einer Batterieeinheit miteinander verbinden, wenn jeder Zellverbinder des Batteriemoduls ein Kontaktglied, das dem Anschluss zweier Batteriezellen aneinander dient und hierzu einen ersten Kontaktabschnitt, der mit einem Zellterminal der einen Batteriezelle verbindbar ist, einen zweiten Kontaktabschnitt, der mit einem Zellterminal der anderen Batteriezelle verbindbar ist, und einen Ausgleichsabschnitt, der zwischen dem ersten und dem zweiten Kontaktabschnitt angeordnet ist und mittels dem z.B. aufgrund von Temperaturänderungen ud.dgl. auftretende Positions- und Fertigungsabweichungen zwischen den fixierten und mittels des Zellverbinders aneinander anzuschließenden Batteriezellen ausgleichbar sind aufweist, und ein Anschlussglied hat, mittels dem der Zellverbinder an die Steuerplatine der Steuerbaugruppe des Batteriemoduls anschließbar ist, das am Kontaktglied des Zellverbinders angebracht ist, mittels dem Statusparameter der Batteriezellen an die Steuerplatine der Steuerbaugruppe des Batteriemoduls weiterleitbar sind, mittels dem im Zusammenwirken mit der Steuerplatine ungleiche Ladezustände zwischen den beiden durch das Kontaktglied des Zellverbinders aneinander angeschlossenen Batteriezellen des Batteriemoduls vorzugsweise automatisch ausgleichbar sind, und dessen Flexibilität im Vergleich zu der des Kontaktglieds erheblich größer ist.

Vorzugsweise ist in der Steuerplatine des Batteriemoduls die Temperatur jeder Batteriezelle überwachbar.

Um Kurzschlüsse innerhalb eines Batteriemoduls zu verhindern, ist es zweckmäßig, wenn zwischen den Batteriezellen der Batterieeinheit eine Isolierfolie angeordnet ist, mittels der die einzelnen Batteriezellen der Batterieeinheit voneinander elektrisch isolierbar sind.

Je nach den räumlichen Verhältnissen, in denen eine mehrere Batteriemodule aufweisende Batterieanordnung zu installieren ist, kann es zweckmäßig sein, wenn die einzelnen Batteriemodule der Batterieanordnung in voneinander räumlich getrennten Teileinheiten angeordnet werden.

Im Folgenden wird die Erfindung anhand von Ausführungsformen unter Bezugnahme auf die Zeichnungen näher erläutert.

Es zeigen:
- Figur 1: eine perspektivische Explosionsdarstellung eines Ausführungsbeispiels eines erfindungsgemäßen Batteriemoduls, das zu einer mehrere derartiger Batteriemodule aufweisenden Batterieanordnung zusammenstellbar ist;
- Figur 2: eine perspektivische Darstellung einer Steuerbaugruppe des in Figur 1 gezeigten Ausführungsbeispiels des erfindungsgemäßen Batteriemoduls;
- Figur 3: eine perspektivische Darstellung einer Batterieeinheit der in Figur 1 gezeigten Ausführungsform des erfindungsgemäßen Batteriemoduls;

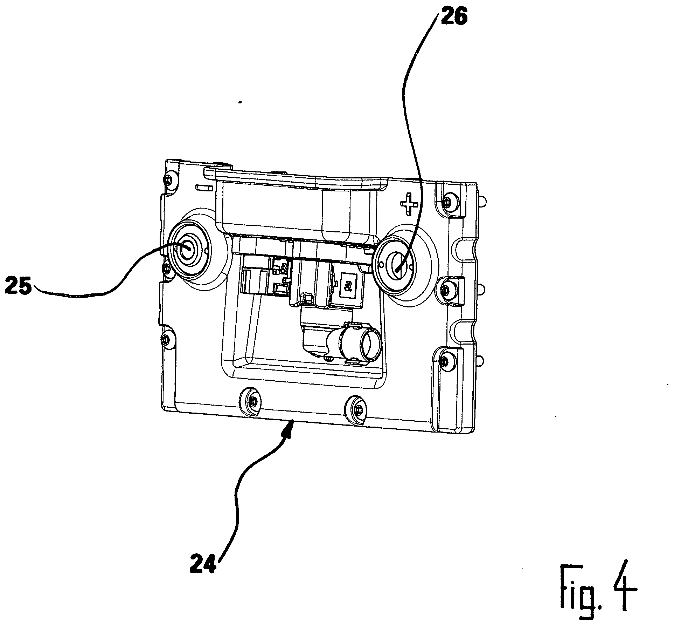

- Figur 4: eine perspektivische Darstellung einer Anschlussplatte des in Figur 1 gezeigten Ausführungsbeispiels des erfindungsgemäßen Batteriemoduls;
- Figur 5: eine perspektivische Darstellung zweier erfindungsgemäßer Batteriemodule in einer abgewandelten Ausführungsform;
- Figur 6: eine perspektivische Darstellung der beiden in Figur 5 gezeigten Batteriemodule im aneinander montierten Zustand; und
- Figur 7: eine perspektivische Prinzipdarstellung eines Zellverbinders für das erfindungsgemäße Batteriemodul.

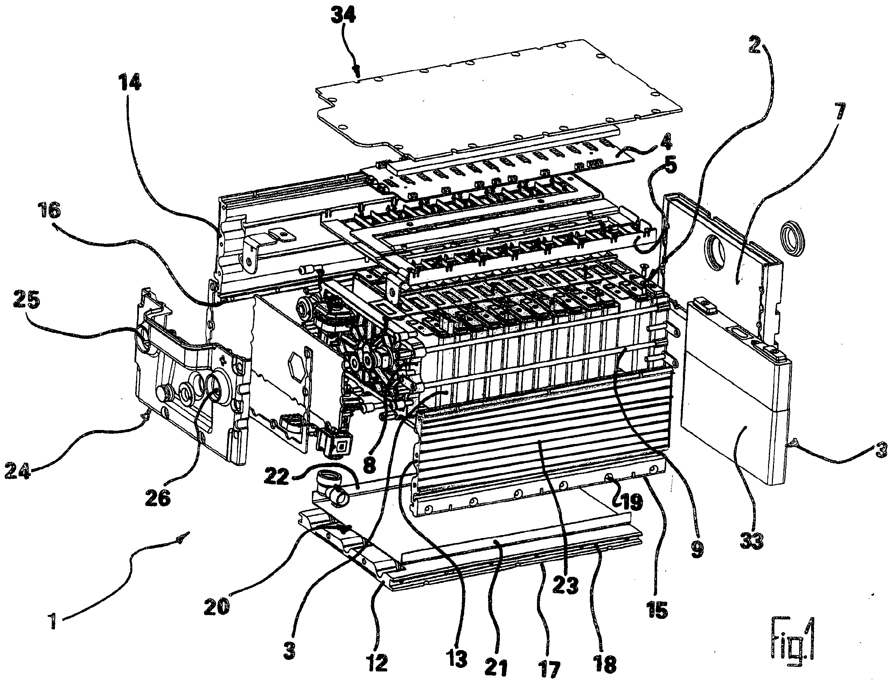

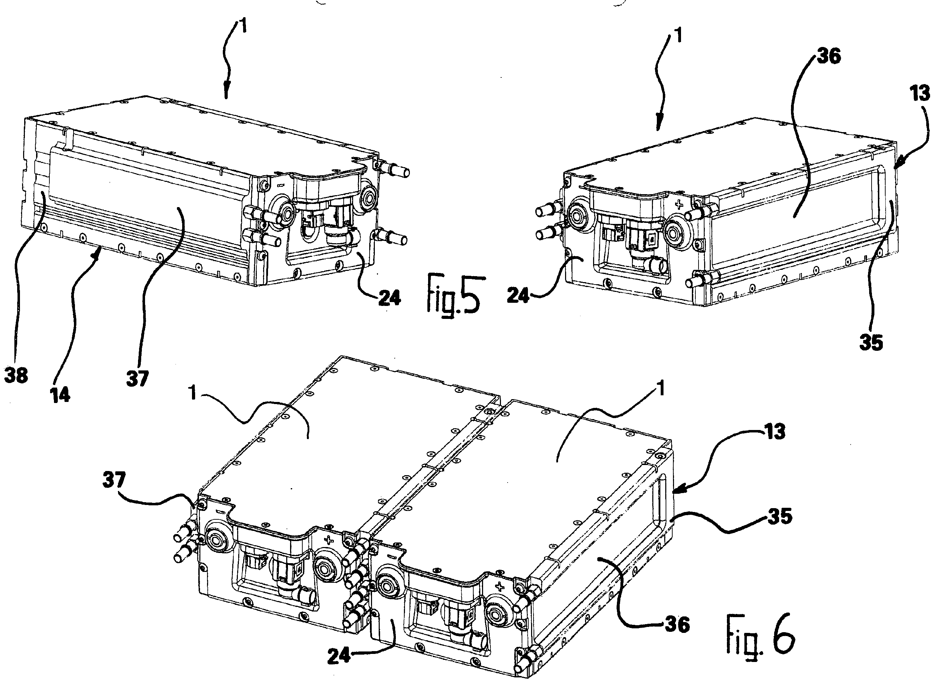

Ein in Figur 1 anhand eines erfindungsgemäßen Ausführungsbeispiels dargestelltes Batteriemodul 1 ist Bestandteil einer in den Figuren nicht dargestellten, mehrere derartiger Batteriemodule 1 aufweisenden Batterieanordnung. Wie die Batteriemodule 1 hierzu zusammengefügt werden, ergibt sich beispielsweise aus Figur 6, welche zwei miteinander verbundene Batteriemodule 1 zeigt.

Zu dem Batteriemodul 1 gehören eine Batterieeinheit 2, die durch eine Vielzahl miteinander verbundener Batteriezellen 3 gebildet wird, und eine Steuerbaugruppe 4, 5, zu der eine Steuerplatine 4 und ein Tragrahmen 5 gehören.

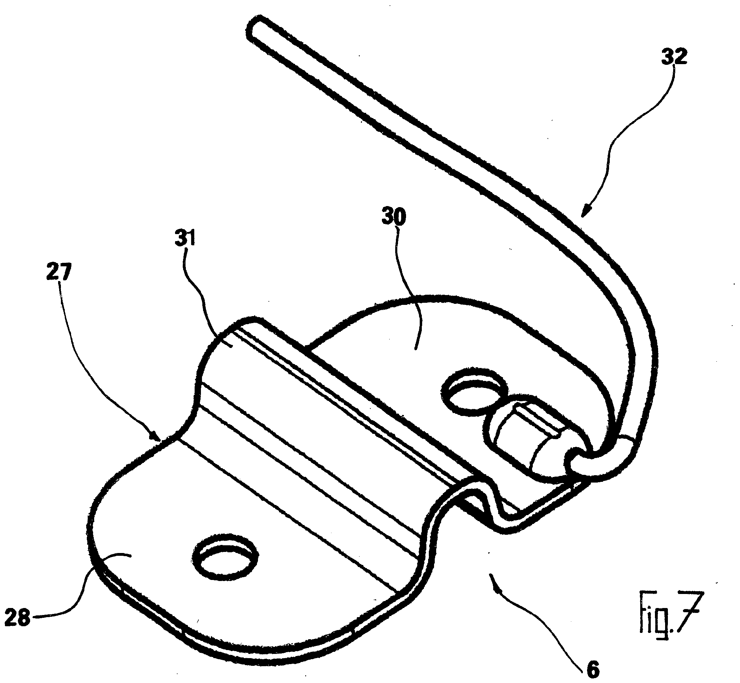

Die Batteriezellen 3 der Batterieeinheit 2 des Batteriemoduls 1 sind untereinander mittels am besten in Figur 7 dargestellter Zellverbinder 6 verbunden, wobei jeder Zellverbinder 6 jeweils zwei Batteriezellen 3 der Batterieeinheit 2 aneinander anschließt. In Figur 1 ist eine der Batteriezellen 3 in einer von den übrigen Batteriezellen 3 der Batterieeinheit 2 entfernten Position dargestellt.

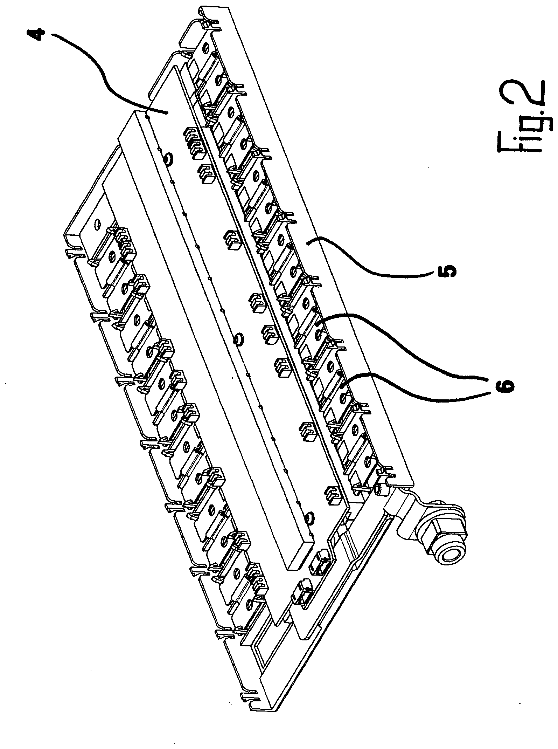

Die in Figur 2 dargestellte Steuerbaugruppe 4, 5, zu der die Steuerplatine 4 und der Tragrahmen 5 gehören, dient der Überwachung und Regelung des Betriebs der Batterieeinheit 2 und ist auf der Batterieeinheit 2 gelagert. Am Tragrahmen 5 der Steuerbaugruppe 4, 5 sind die Zellverbinder 6 vorgesehen, mittels denen die entsprechend zugeordneten Zellterminale 29 der Batteriezellen 3 der Batterieeinheit 2 miteinander verbunden sind. Hierzu stehen die Zellterminale 29 der Batteriezellen 3 in den Tragrahmen 5 der Steuerbaugruppe 4, 5 vor.

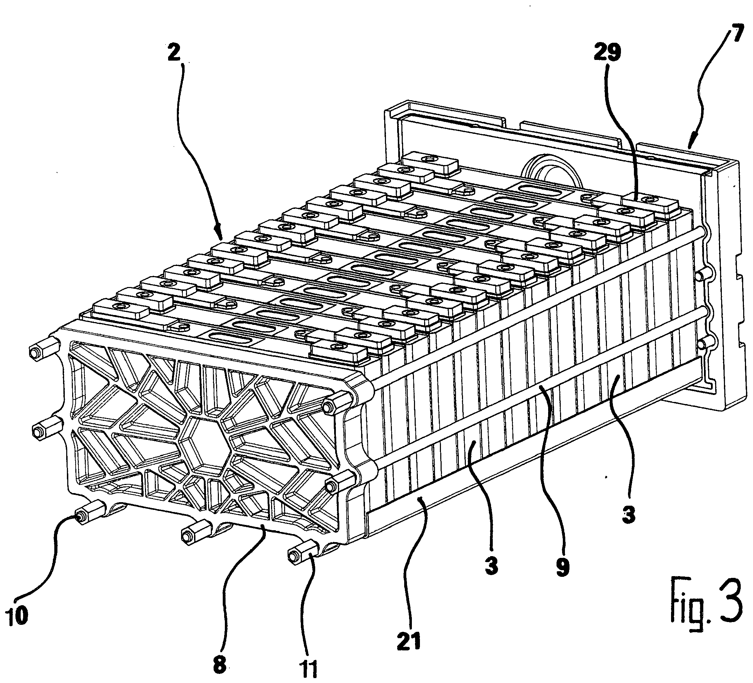

Wie sich am besten aus Figur 3 ergibt, ist die Batterieeinheit 2 mit ihrer in Figur 3 rechten Stirnwand in Anlage an der Innenseite einer Gehäusestirnwand 7 angeordnet, die ihrerseits in Bezug auf eine Gehäusebaugruppe 12, 13, 14, zu der eine Bodenplatte 12 und zwei Seitenwandungen 13, 14 gehören, ortsfest ist. An ihrer der Gehäusestirnwand 7 entfernten, in Figur 3 linken Stirnwand ist die Batterieeinheit 2 mit einem Spannglied 8 versehen. Das Spannglied 8 bildet quasi die andere Stirnwand der Batterieeinheit 2.

Zwischen der an der Gehäusestirnwand 7 anliegenden Stirnwand der Batterieeinheit 2 und dem Spannglied 8 erstrecken sich Stäbe 9, die an ihren dem Spannglied 8 zugeordneten Endabschnitten mit Gewindeabschnitten 10 ausgebildet sind. Die Gewindeabschnitte 10 durchdringen am Spannglied 8 vorgesehene Öffnungen und tragen an ihren freien Enden Spannmuttern 11. Durch entsprechende Drehung der Spannmuttern 11 kann das Spannglied 8 in Richtung auf die der Gehäusestirnwand 7 zugeordnete Stirnwand der Batterieeinheit 2 verstellt werden, wodurch die Batteriezellen 3 der Batterieeinheit 2 aneinandergedrückt werden.

Zwischen den einzelnen Batteriezellen 3 der Batterieeinheit 2 ist jeweils eine Isolierfolie 33 vorgesehen, mittels der die einzelnen Batteriezellen 3 der Batterieeinheit 2 voneinander elektrisch isoliert sind. Dies gilt auch dann, wenn die Batteriezellen 3 der Batterieeinheit 2 mittels des Spannglieds 8 fest gegeneinander verpresst werden.

Zu dem Batteriemodul 1, wie es in Figur 1 dargestellt ist, gehört die Gehäusebaugruppe 12, 13, 14 mit der Bodenplatte 12 und den beiden einander gegenüberliegend angeordneten Seitenwandungen 13, 14. Die beiden Seitenwandungen 13, 14 haben, wie aus Figur 1 hervorgeht, an ihren unteren Längskanten 15 auf der der Batterieeinheit 2 zugewandten Innenseite jeweils einen Längsvorsprung 16, der sich etwa über die gesamte Länge der jeweiligen Seitenwandung 13, 14 erstreckt. Diesen Längsvorsprüngen 16 der beiden Seitenwandungen 13, 14 zugeordnet sind an den beiden Längskanten 17 der Bodenplatte 12 ausgebildete Längsausnehmungen 18. Die beiden seitenwandungsseitigen Längsvorsprünge 16 greifen in die ihnen zugeordnete bodenplattenseitige Längsausnehmung 18 ein, wodurch sich eine formschlüssige Verbindung zwischen der Bodenplatte 12 einerseits und den beiden Seitenwandungen 13, 14 andererseits ergibt. Zur Fixierung der beiden Seitenwandungen 13, 14 an der Bodenplatte 12 sind Schraubverbindungen 19 vorgesehen, die sich mit Abstand zueinander im Bereich der unteren Längskanten 15 der beiden Seitenwandungen 13, 14 erstrecken, wobei deren Schrauben in entsprechend an den Längskanten 17 der Bodenplatte vorgesehene Gewindeböhrungen eingreifen.

Zwischen der der Batterieeinheit 2 bzw. den Batteriezellen 3 derselben zugewandten Oberseite der Bodenplatte 12 und der Unterseite der Batterieeinheit 2 bzw. der Batteriezellen 3 ist eine Aufnahmeschale 20 angeordnet, die im Falle der dargestellten Ausführungsform aus Kunststoff ausgebildet ist. Die Aufnahmeschale 20 ruht auf der Innenseite der Bodenplatte 12 und hat an ihren beiden Längsseiten Abkantungen 21, 22, die in Richtung zur Batterieeinheit 2 vorstehen und sich über die gesamte Länge der Aufnahmeschale 20 erstrecken. Zwischen den beiden Abkantungen 21, 22 der Aufnahmeschale 20 ist ein unterer Abschnitt der Batterieeinheit 2 bzw. der Batteriezellen 3 aufnehm- und halterbar.

Die beiden Seitenwandungen 13, 14 der Gehäusebaugruppe 12, 13, 14 des Batteriemoduls 1 sind im Falle des in Figur 1 dargestellten Ausführungsbeispiels des Batteriemoduls 1 mit einer Vielzahl Kühlrippen 23 ausgebildet, die sich parallel zueinander und mit einem vergleichsweise geringen Abstand zueinander über die Länge der Seitenwandungen 13, 14 erstrecken.

Alternativ oder kumulativ können die Seitenwandungen 13, 14 der Gehäusebaugruppe 12, 13, 14 auch wasser- oder luftgekühlt werden.

Bei einer anhand der Figuren 5 und 6 erläuterten Ausführungsform des Batteriemoduls 1 ist die Seitenwandung 13 desselben mit einem im dargestellten Ausführungsbeispiel etwa U-förmigen Vorsprungabschnitt 35 ausgestaltet, der im dargestellten Ausführungsbeispiel an der der Gehäusestirnwand 7 abgewandten Stirnseite der Batterieeinheit 2 offen und im Bereich der Gehäusestirnwand 7 geschlossen ist. Zwischen diesem U-förmigen Vorsprungabschnitt 35 ist ein Ausnehmungsabschnitt 36 vorgesehen.

Auf der anderen Seitenwandung 14 der Gehäusebaugruppe 12, 13, 14 ist, wie sich am besten aus der Darstellung des in Figur 5 links angeordneten Batteriemoduls 1 ergibt, ein Vorsprungabschnitt 37 ausgebildet, der hinsichtlich seiner Form komplementär zu dem Ausnehmungsabschnitt 36 der ersten Seitenwandung 13 ausgebildet ist. Entsprechend hat die mit dem Vorsprungabschnitt 37 versehene Seitenwandung 14 einen Ausnehmungsabschnitt 38, der den Vorsprungabschnitt 37 umgibt und der hinsichtlich seiner Form komplementär zum U-förmigen Vorsprungabschnitt 35 der ersten Seitenwandung 13 gestaltet ist.

Wenn zwei Batteriemodule 1, wie dies in Figur 6 dargestellt ist, zu einer Batterieanordnung zusammengefügt werden, sind die Vorsprungabschnitte 35 der einander benachbarten Batteriemodule 1 in den Ausnehmungsabschnitten 38 formschlüssig aufgenommen, wobei die Vorsprungabschnitte 37 jeweils in den Ausnehmungsabschnitten 36 der benachbarten Batteriemodule aufgenommen sind. Hierdurch ergibt sich ein stabiles Gefügeder aus den Batteriemodulen 1 ausgestalteten Batterieanordnungen.

An ihrer der Gehäusestirnwand 7 entgegengesetzten Stirnseite ist die Gehäusebaugruppe 12, 13, 14 des Batteriemoduls 1 mittels einer Anschlussplatte 24 geschlossen. Die Anschlussplatte 24 ist für jede der beiden Stromschienen der Batterieeinheit 2 mit einem Anschlussterminal 25 bzw. 26 versehen. Die beiden Anschlussterminale 25, 26 sind jeweils als Doppelmutterverbindung ausgebildet und an ihren Außenseiten mit einem vergleichsweise geringen technisch-konstruktiven Aufwand an elektrische Elemente anschließbar. Auf der Innenseite der Anschlussplatte 24 sind deren Anschlussterminals 25, 26 mit ihnen zugeordneten Anschlussenden der beiden Stromschienen des Batteriemoduls 1 bzw. der Batterieeinheit 2 verschraubbar.

Die Zellverbinder 6 des Batteriemoduls 1 sind, wie am besten aus den Figuren 2 und 7 hervorgeht, zusammengesetzt aus einem Kontaktglied 27 und einem Anschlussglied 32.

Das Kontaktglied 27 dient dem Anschluss jeweils zweier Batteriezellen 3 der Batterieeinheit 2 aneinander und hat hierzu einen ersten Kontaktabschnitt 28, der mit einem Zellterminal 29 der einen Batteriezelle 3 verbindbar ist, und einen zweiten Kontaktabschnitt 30, der mit einem Zellterminal 29 der anderen Batteriezelle 3 verbindbar ist. Zwischen dem ersten Kontaktabschnitt 28 und dem zweiten Kontaktabschnitt 30 des Kontaktglieds 27 ist ein Ausgleichabschnitt 31 ausgebildet. Mittels dieses Ausgleichsabschnitts sind aufgrund von Temperaturänderungen ud.dgl. auftretende Positions- und Fertigungsabweichungen zwischen den fixierten und mittels des Zellverbinders 6 aneinander anzuschließenden Batteriezellen 3 ausgleichbar.

Das Anschlussglied 32 des Kontaktglieds 27 dient dem elektrischen bzw. steuerungstechnischen Anschluss des Zellverbinders 6 an die Steuerplatine 4 der Steuerbaugruppe 4, 5. Das Anschlussglied 32 ist am Kontaktglied 27 des Zellverbinders 6 angebracht. Mittels dem Anschlussglied 32 sind Statusparameter der an das betreffende Kontaktglied 27 angeschlossenen Batteriezellen 3 der Batterieeinheit 2 des Batteriemoduls an die Steuerplatine 4 der Steuerbaugruppe 4, 5 des Batteriemoduls 1 weiterleitbar: Entsprechend können aufgrund dieser an die Steuerplatine weitergeleiteter Statusparameter ungleiche Ladezustände zwischen den beiden durch das betreffende Kontaktglied 27 des Zellverbinders 6 aneinander angeschlossenen Batteriezellen 3 des Batteriemoduls ausgeglichen werden, wobei dies in der dargestellten Ausführungsform vorzugsweise automatisch erfolgt. Das Anschlussglied 32 ist mit einer Flexibilität ausgestaltet, die im Vergleich zu der des Kontaktglieds 27 erheblich größer ist.

Dadurch, dass jeder Zellverbinder 6 der Batterieeinheit 2 mit einem Anschlussglied 32 ausgerüstet und so an die Steuerplatine 4 der Steuerbaugruppe 4, 5 des Batteriemoduls 1 angeschlossen ist, kann die Temperatur jeder einzelnen Batteriezelle 3 der Batterieeinheit 2 überwacht werden.

Aus Figur 1 geht hervor, dass die die Steuerplatine 4 und den Tragrahmen 5 aufweisende Steuerbaugruppe 4, 5 des Batteriemoduls 1 auf der Oberseite der Batterieeinheit 2 ruht. Oberhalb dieser Steuerbaugruppe 4, 5 ist ein Gehäusedeckel 34 angeordnet, mittels dem das Gehäuse bzw. die Gehäusebaugruppe 12, 13, 14 des Batteriemoduls 1 an deren Oberseite abschließbar ist.

Wie dies in Figur 6 beispielhaft angedeutet ist, können die vorstehend geschilderten Batteriemodule 1 zu eine beliebige Anzahl derartiger Batteriemodule 1 aufweisenden Batterieanordnungen zusammengestellt werden. Hierbei ist es möglich, dass zu einer Batterieanordnung, deren Batteriemodule 1 aneinander angeschlossen sind, Teileinheiten mit jeweils mehreren Batteriemodulen 1 gehören, die voneinander räumlich getrennt angeordnet sind.

## Patentansprüche

1. Batteriemodul mit einer Batterieeinheit (2), die eine Vielzahl miteinander verbundener Batteriezellen (3) aufweist, Zellverbindern (6), mittels denen jeweils zwei Batteriezellen (3) der Batterieeinheit (2) untereinander verbindbar sind, wobei die Batterieeinheit (2) mit einer Stirnwand an einer in Bezug auf eine Gehäusebaugruppe (12, 13, 14) des Batteriemoduls (1) mit einer Bodenplatte (12) und zwei einander gegenüberliegend angeordneten Seitenwandungen (13, 14) ortsfest angeordneten Gehäusestirnwand (7) anliegt, wobei an der der ortsfesten Gehäusestirnwand (7) entfernten Stirnwand der Batterieeinheit (2) ein Spannglied (8) angeordnet ist, welches in Längsrichtung der Batterieeinheit auf die ortsfeste Gehäusestirnwand (7) zu verstellbar ist, wobei das Batteriemodul (1) einen Gehäusedeckel (34) und eine Steuerbaugruppe (4, 5) mit einer Steuerplatine (4) zur Überwachung und Regelung des Betriebs der Batterieeinheit (2) und einem Tragrahmen (5), an dem die Zellverbinder (6) angeordnet sind, aufweist, wobei die Steuerbaugruppe (4, 5) zwischen der Oberseite der Batterieeinheit (2) und dem Gehäusedeckel (34) angeordnet ist, wobei der Tragrahmen (5) der Steuerbaugruppe (4, 5) auf der Batterieeinheit (2) lagert, wobei die Seitenwandungen (13, 14) an ihren unteren Längskanten (15) auf ihrer Innenseite Längsvorsprünge (16) aufweisen, die in an zugeordneten Längskanten (17) der Bodenplatte (12) ausgebildete Längsausnehmungen (18) eingreifen und mit der Bodenplatte (12) verbindbar sind, wobei eine Aufnahmeschale (20) vorgesehen ist, die aus Kunststoff ausgebildet ist, auf der Innenseite der Bodenplatte (12) ruht und an ihren Längsseiten in aufwärtiger Richtung vorstehende Abkantungen (21, 22) aufweist, zwischen denen ein unterer Abschnitt der Batterieeinheit (2) des Batteriemoduls (1) aufnehmbar ist, wobei das Batteriemodul (1) für eine Mehrzahl derartiger Batteriemodule (1) aufweisende Batterieanordnungen ausgestaltet ist, und wobei die Seitenwandung (13, 14) eine räumliche Struktur mit zumindest einem Vorsprungabschnitt (35, 37) und zumindest einem Ausnehmungsabschnitt (36, 38) aufweist, der geeignet ist, in den zumindest einen Ausnehmungsabschnitt (36, 38) einer zugeordneten Seitenwandung (13, 14) eines benachbarten Batteriemoduls (1) einzugreifen, bzw. geeignet ist, den zumindest einen Vorsprungabschnitt (35, 36) einer zugeordneten Seitenwandung (13, 14) eines benachbarten Batteriemoduls (1) aufzunehmen.

2. Batteriemodul nach Anspruch 1, zwischen dessen ortsfester Gehäusestirnwand (7) und dessen Spannglied (8) Stäbe (9) angeordnet sind, die spanngliedseitig Gewindeabschnitte (10) mit Spannmuttern (11) aufweisen, mittels denen das Spannglied (8) in Richtung zur ortsfesten Gehäusestirnwand (7) verstellbar ist.

3. Batteriemodul nach Anspruch 1 oder 2, bei dem die Längsvorsprünge (16) mittels Schraubverbindungen (19) mit der Bodenplatte (12) verbindbar sind.

4. Batteriemodul nach einem der Ansprüche 1 bis 3, dessen Seitenwandungen (13, 14) auf ihrer Außenfläche mit einer Vielzahl Kühlrippen (23) ausgebildet sind.

5. Batteriemodul nach einem der Ansprüche 1 bis 4, dessen Seitenwandungen (13, 14) wassergekühlt sind.

6. Batteriemodul nach einem der Ansprüche 1 bis 4, dessen Seitenwandungen (13, 14) luftgekühlt sind.

7. Batteriemodul nach einem der Ansprüche 1 bis 6, bei dem die räumliche Struktur der Seitenwandungen (13, 14) zu der der Seitenwandungen (14, 13) benachbarter Batteriemodule (1) komplementär gestaltet ist.

8. Batteriemodul nach einem der Ansprüche 1 bis 7, mit einer Anschlussplatte (24), mittels der die Gehäusebaugruppe (12, 13, 14) des Batteriemoduls (1) an einer Stirnseite der- bzw. desselben verschließbar ist und die für jede der beiden Stromschienen des Batteriemoduls (1) ein Anschlussterminal (25, 26) aufweist, wobei jedes Anschlussterminal (25, 26) als Doppelmutterverbindung ausgebildet und an seiner Außenseite anschließbar ist.

9. Batteriemodul nach Anspruch 8, dessen Anschlussplatte (24) an ihren Anschlussterminals (25, 26) mit Anschlussenden der Stromschienen des Batteriemoduls (1) verschraubbar ist.

10. Batteriemodul nach einem der Ansprüche 1 bis 9, bei dem jeder Zellverbinder (6) ein Kontaktglied (27), das dem Anschluss zweier Batteriezellen (3) aneinander dient und hierzu einen ersten Kontaktabschnitt (28), der mit einem Zellterminal (29) der einen Batteriezelle (3) verbindbar ist, einen zweiten Kontaktabschnitt (30), der mit einem Zellterminal (29) der anderen Batteriezelle (3) verbindbar ist, und einen Ausgleichabschnitt (31), der zwischen dem ersten (28) und dem zweiten Kontaktabschnitt (30) angeordnet ist und mittels dem auftretende Positions- und Fertigungsabweichungen zwischen den fixierten und mittels des Zellverbinders (6) aneinander anzuschließenden Batteriezellen (3) ausgleichbar sind, aufweist, und ein Anschlussglied (32) hat, mittels dem der Zellverbinder (6) an die Steuerplatine (4) der Steuerbaugruppe (4, 5) des Batteriemoduls (1) anschließbar ist, das am Kontaktglied (27) des Zellverbinders (6) angebracht ist, mittels dem Statusparameter der Batteriezellen (3) an die Steuerplatine (4) der Steuerbaugruppe (4, 5) des Batteriemoduls (1) weiterleitbar sind, mittels dem im Zusammenwirken mit der Steuerplatine (4) ungleiche Ladezustände zwischen den beiden durch das Kontaktglied (27) des Zellverbinders (6) aneinander angeschlossenen Batteriezellen (3) des Batteriemoduls (1) vorzugsweise automatisch ausgleichbar sind, und dessen Flexibilität im Vergleich zu der des Kontaktglieds (27) erheblich größer ist.

11. Batteriemodul nach Anspruch 10, in dessen Steuerplatine (4) die Temperatur jeder Batteriezelle (3) überwachbar ist.

12. Batteriemodul nach einem der Ansprüche 1 bis 11, bei dem zwischen den Batteriezellen (3) der Batterieeinheit (2) eine Isolierfolie (33) angeordnet ist, mittels der die einzelnen Batteriezellen (3) der Batterieeinheit (2) voneinander elektrisch isolierbar sind.

13. Batterieanordnung aus einer Mehrzahl von Batteriemodulen (1), nach einem der Ansprüche 1 bis 12, bei der die einzelnen Batteriemodule (1) in voneinander räumlich getrennten Teileinheiten angeordnet sind.

## Claims

1. A battery module with a battery unit (2) having a plurality of inter-connected battery cells (3), and with cell connectors (6), by means of which two respective battery cells (3) of the battery unit (2) can be connected with each other, wherein the end wall of the battery unit (2) bears against a housing end wall (7) which is arranged in a fixed position relative to a housing assembly (12, 13, 14) of the battery module (1) having a bottom plate (12) and two side walls (13, 14) arranged opposite from each other, wherein a tensioning element (8) is arranged at the end wall of the battery unit (2) opposite from the fixed-position housing end wall (7), which tensioning element (8) is adjustable in the longitudinal direction of the battery unit toward the fixed-position housing end wall (7), wherein the battery module (1) has a housing cover (34) and a control assembly (4, 5) having a control circuit board (4) for monitoring and regulating the operation of the battery unit (2) and a support frame (5) on which the cell connectors (6) are arranged, wherein the control assembly (4, 5) is arranged between the top of the battery unit (2) and the housing cover (34), wherein the support frame (5) of the control assembly (4, 5) is supported on the battery unit (2), wherein the side walls (13, 14) have longitudinal protrusions (16) on the inside of their bottom longitudinal edges (15), which longitudinal protrusions (16) engage with longitudinal recesses (18) formed on allocated longitudinal edges (17) of the bottom plate (12) and which longitudinal protrusions (16) can be connected to the bottom plate (12), wherein a holder (20) is provided which is designed from plastic, which rests on the inside of the bottom plate (12) and which has protruding edges (21, 22) pointing upward at its longitudinal sides, between which edges a lower section of the battery unit (2) of the battery module (1) can be received, wherein the battery module (1) is designed for battery arrangements having a plurality of such battery modules (1), and wherein the side wall (13, 14) has a spatial structure having at least one protruding section (35, 37) and at least one recessed section (36, 38), which is suitable to engage with the at least one recessed section (36, 38) of an allocated side wall (13, 14) of an adjacent battery module (1), or, respectively, is suitable to receive the at least one protruding section (35, 36) of an allocated side wall (13, 14) of an adjacent battery module (1).

2. The battery module according to Claim 1, wherein rods (9) are arranged between its fixed-position housing end wall (7) and its tensioning element (8), which rods (9) have threaded sections (10) with tensioning nuts (11) on their sides facing the tensioning element (8), which threaded sections and nuts are used to adjust the tensioning element (8) in the direction of the fixed-position housing end wall (7).

3. The battery module according to Claim 1 or 2, wherein the longitudinal protrusions (16) can be connected to the bottom plate (12) by means of screw connections (19) .

4. The battery module according to any one of Claims 1 to 3, whose side walls (13, 14) are designed having a plurality of cooling fins (23) on their exterior surface.

5. The battery module according to any one of Claims 1 to 4, whose side walls (13, 14) are water-cooled.

6. The battery module according to any one of Claims 1 to 4, whose side walls (13, 14) are air-cooled.

7. The battery module according to any one of Claims 1 to 6, wherein the spatial structure of the side walls (13, 14) is designed to be complementary to that of the side walls (14, 13) of adjacent battery modules (1).

8. The battery module according to any one of Claims 1 to 7, having a connection plate (24), by means of which the housing assembly (12, 13, 14) of the battery module (1) can be closed on one of its end walls and which has a connection terminal (25, 26) for each of the two bus rails of the battery module (1), wherein each connection terminal (25, 26) is designed as a double nut connection and each can be connected on its exterior side.

9. The battery module according to Claim 8, wherein connection ends of the bus rails of the battery module (1) can be bolted onto the connection terminals (25, 26) of its connection plate (24).

10. The battery module according to any one of Claims 1 to 9, in which every cell connector (6) has a contact link (27), which serves to connect two battery cells (3) with each other and which, for this purpose, has a first contact section (28), which can be connected to a cell terminal (29) of the first battery cell (3), a second contact section (30), which can be connected to a cell terminal (29) of the other battery cell (3), and a compensating section (31), which is arranged between the first (28) and the second contact section (30) and by means of which positioning or manufacturing deviations between the fixed-position battery cells (3) which are to be connected to each other can be compensated for, and in which every cell connector (6) has a connecting link (32), by means of which the cell connector (6) can be connected to the control circuit board (4) of the control assembly (4, 5) of the battery module (1), which is attached to the contact link (27) of the cell connector (6), by means of which status parameters of the battery cells (3) can be transmitted to the control circuit board (4) of the control assembly (4, 5) of the battery module (1), by means of which, in cooperation with the control circuit board (4), uneven charge statuses between the two battery cells (3) of the battery module (1), which are connected with each other via the contact link (27) of the cell connector (6), can be balanced, preferably balanced automatically, and wherein the flexibility of said connecting link (32) is significantly greater than that of the contact link (27).

11. The battery module according to Claim 10, wherein the temperature of each battery cell (3) can be monitored in its control circuit board (4).

12. The battery module according to any one of Claims 1 to 11, in which an insulating film (33) is arranged between the battery cells (3) of the battery unit (2), by means of which film the individual battery cells (3) of the battery unit (2) can be electrically insulated from each other.

13. A battery arrangement of a plurality of battery modules (1) according to any one of Claims 1 to 12, in which the individual battery modules (1) are arranged in units which are spatially separated from each other.

## Revendications

1. Module de batterie avec une unité de batterie (2) qui présente une pluralité de cellules de batterie (3) connectées entre elles, des connecteurs de cellules (6) au moyen desquels respectivement deux cellules de batterie (3) de l'unité de batterie (2) peuvent être connectées l'une à l'autre, dans lequel l'unité de batterie (2) repose avec une paroi frontale contre une paroi frontale de boîtier (7) disposée de manière fixe par rapport à un ensemble boîtier (12, 13, 14) du module de batterie (1) avec une plaque de fond (12) et deux parois latérales (13, 14) disposées en vis-à-vis l'une de l'autre, dans lequel, au niveau de la paroi frontale éloignée de la paroi frontale de boîtier fixe (7) de l'unité de batterie (2) un élément de serrage (8) est disposé, lequel est déplaçable en direction longitudinale de l'unité de batterie vers la paroi frontale de boîtier fixe (7), dans lequel le module de batterie (1) présente un couvercle de boîtier (34) et un bloc de commande (4, 5) avec une platine de commande (4) pour surveiller et réguler le fonctionnement de l'unité de batterie (2) et un cadre de support (5) au niveau duquel les connecteurs de cellules (6) sont disposés, dans lequel le bloc de commande (4, 5) est disposé entre le côté supérieur de l'unité de batterie (2) et le couvercle de boîtier (34), dans lequel le cadre de support (5) du bloc de commande (4, 5) repose sur l'unité de batterie (2), dans lequel les parois latérales (13, 14) présentent des saillies longitudinales (16) au niveau de leurs arêtes inférieures (15) sur leur côté intérieur, lesquelles sont en prise avec des évidement longitudinaux (18) réalisés au niveau d'arêtes longitudinales (17) associées de la plaque de fond (12) et peuvent être reliées à la plaque de fond (12), dans lequel une coque de réception (20) est prévue, laquelle est réalisée en plastique, repose sur le côté intérieur de la plaque de fond (12) et présente, sur ses côtés longitudinaux, des bords repliés saillants (21, 22) en direction vers le haut entre lesquels une partie inférieure de l'unité de batterie (2) du module de batterie (1) peut être réceptionnée, dans lequel le module de batterie (1) est réalisé pour une pluralité de systèmes de batterie présentant de tels modules de batterie (1), et dans lequel la paroi latérale (13, 14) présente une structure spatiale avec au moins une partie saillante (35, 37) et au moins une partie d'évidement (36, 38) qui convient pour se mettre en prise dans l'au moins une partie d'évidement (36, 38) d'une paroi latérale (13, 14) associée d'un module de batterie voisin (1) ou qui convient pour réceptionner l'au moins une partie saillante (35, 36) d'une paroi latérale (13, 14) associée d'un module de batterie (1) voisin.

2. Module de batterie selon la revendication 1, entre la paroi frontale de boîtier fixe (7) duquel et l'organe de serrage (8) duquel des tiges (9) sont disposées, lesquelles présentent, du côté d'élément de serrage, des parties filetées (10) avec des écrous de serrage (11) au moyen desquels l'élément de serrage (8) peut être réglé en direction vers la paroi frontale de boîtier fixe (7).

3. Module de batterie selon la revendication 1 ou 2, dans lequel les saillies longitudinales (16) peuvent être reliées au moyen de raccords à vis (19) à la plaque de fond (12).

4. Module de batterie selon l'une des revendications 1 à 3 dont les parois latérales (13, 14) sont réalisées, sur leur surface extérieure, avec une pluralité d'ailettes de refroidissement (23).

5. Module de batterie selon l'une des revendications 1 à 4, dont les parois latérales (13, 14) sont refroidies à l'eau.

6. Module de batterie selon l'une des revendications 1 à 4, dont les parois latérales (13, 14) sont refroidies à l'air.

7. Module de batterie selon l'une des revendications 1 à 6, dans lequel la structure spatiale des parois latérales (13, 14) est réalisée de manière complémentaire à celle des parois latérales (14, 13) de modules de batterie (1) voisins.

8. Module de batterie selon l'une des revendications 1 à 7, avec une plaque de connexion (24) au moyen de laquelle il est possible de fermer l'ensemble boîtier (12, 13, 14) du module de batterie (1) au niveau d'un côté frontal de celui-ci ou celui-là et qui présente, pour chacune des deux barres conductrices du module de batterie (1), une borne de connexion (25, 26), dans lequel chaque borne de connexion (25, 26) est réalisée en tant que raccord à écrou double et peut être raccordée sur son côté extérieur.

9. Module de batterie selon la revendication 8, dont la plaque de connexion (24) peut être vissée au niveau de ses bornes de connexion (25, 26) avec des extrémités de raccordement des barres conductrices du module de batterie (1).

10. Module de batterie selon l'une des revendications 1 à 9, dans lequel chaque connecteur de cellules (6) présente un organe de contact (27) qui sert au raccordement de deux cellules de batteries (3) l'une à l'autre et à cet effet, une première partie de contact (28) pouvant être connectée à une borne de cellule (29) de l'une des cellules de batterie (3), une deuxième partie de contact (30) pouvant être connectée à une borne de cellule (29) de l'autre cellule de batterie (3), et une partie de compensation (31) disposée entre la première (28) et la deuxième partie de contact (30) et au moyen de laquelle des divergences de position et de fabrication apparaissant entre les cellules de batterie (3) fixées et à connecter entre elles au moyen du connecteur de cellules (6) peuvent être compensées, et a un organe de connexion (32) au moyen duquel le connecteur de cellules (6) peut être connecté à la platine de commande (4) du bloc de commande (4, 5) du module de batterie (1), lequel est fixé sur l'organe de contact (27) du connecteur de cellules (6), au moyen duquel il est possible de retransmettre des paramètres de statut des cellules de batterie (3) à la platine de commande (4) du bloc de commande (4, 5) du module de batterie (1), au moyen duquel, en coopération avec la platine de commande (4), des états de charge non égaux entre les deux cellules de batterie (3) du module de batterie (1) connectées l'une à l'autre par l'organe de contact (27) du connecteur de cellules (6) peuvent être compensés de préférence automatiquement, et dont la flexibilité est nettement supérieure en comparaison avec l'organe de contact (27).

11. Module de batterie selon la revendication 10, dans la platine de commande (4) duquel il est possible de surveiller la température de chaque cellule de batterie (3).

12. Module de batterie selon l'une des revendications 1 à 11, dans lequel une feuille isolante (33) est disposée entre les cellules de batterie (3) de l'unité de batterie, (2) au moyen de laquelle les cellules de batterie (3) individuelles de l'unité de batterie (2) peuvent être isolées électriquement les unes des autres.

13. Système de batterie en une pluralité de modules de batterie (1) selon l'une des revendications 1 à 12, dans lequel les modules de batterie individuels (1) sont disposés en unités partielles séparées spatialement les unes des autres.
